(19) Europäisches Patentamt / European Patent Office / Office européen des brevets

(11) **EP 3 991 262 B1**

(12) **FASCICULE DE BREVET EUROPEEN**

(45) Date de publication et mention de la délivrance du brevet:
**07.06.2023 Bulletin 2023/23**

(21) Numéro de dépôt: **20733860.9**

(22) Date de dépôt: **25.06.2020**

(51) Classification Internationale des Brevets (IPC):
*H02J 3/36* (2006.01)     *H02J 3/46* (2006.01)
*H02J 5/00* (2016.01)

(52) Classification Coopérative des Brevets (CPC):
**H02J 3/36; H02J 3/46; H02J 5/00;** Y02E 60/60

(86) Numéro de dépôt international:
**PCT/EP2020/067921**

(87) Numéro de publication internationale:
**WO 2020/260513 (30.12.2020 Gazette 2020/53)**

(54) **PROCÉDÉ DE COMMANDE D'UN RÉSEAU DE TRANSMISSION ÉLECTRIQUE**

VERFAHREN ZUR STEUERUNG EINES ELEKTRISCHEN ÜBERTRAGUNGSNETZES

METHOD FOR CONTROLLING AN ELECTRICAL TRANSMISSION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2019 FR 1906969**

(43) Date de publication de la demande:
**04.05.2022 Bulletin 2022/18**

(73) Titulaires:
• **Supergrid Institute**
  **69100 Villeurbanne (FR)**
• **CentraleSupélec**
  **91190 - Gif sur Yvette (FR)**
• **Centre national de la recherche scientifique**
  **75016 Paris (FR)**
• **Université Paris-Saclay**
  **91190 Saint-Aubin (FR)**

(72) Inventeurs:
• **GONZALEZ, Juan, Carlos**
  **69007 LYON (FR)**
• **COSTAN, Valentin**
  **69007 LYON (FR)**
• **DAMM, Gilney**
  **69007 LYON (FR)**
• **BENCHAIB, Abdelkrim**
  **69007 LYON (FR)**
• **LAMNABHI-LAGARRIGUE, Françoise**
  **69007 LYON (FR)**
• **LUSCAN, Bruno**
  **69007 LYON (FR)**

(74) Mandataire: **Opilex**
  **32, rue Victor Lagrange**
  **69007 Lyon (FR)**

(56) Documents cités:
EP-A1- 3 035 476     WO-A1-2012/175110
WO-A1-2014/053171     WO-A1-2019/097183
US-A1- 2012 201 059     US-A1- 2017 207 630

EP 3 991 262 B1

**Description**

L'invention concerne les stratégies de commande de réseaux électriques, en particulier les stratégies de commande en vue d'assurer la stabilité de réseaux électriques incluant plusieurs postes de conversion d'un réseau continu maillé connectés par l'intermédiaire de plusieurs lignes électriques continues, destinés à permettre l'échange de puissance entre des bus de tension alternative.

L'intégration de réseaux continus maillés dans des réseaux alternatifs est une technologie prometteuse pour permettre le contrôle de la puissance active et réactive et pour faciliter l'injection de puissance d'origine renouvelable dans le réseau alternatif.

Un dysfonctionnement dans le réseau se manifeste parfois par un déséquilibre transitoire de puissance, certaines génératrices accélérant et d'autres décélérant. On observe alors une évolution du déphasage entre les bus de tension alternative du réseau. Si le système ne peut pas revenir à l'équilibre à l'issue d'une perturbation, il peut devenir instable car les génératrices de puissance peuvent tourner de façon asynchrone et que l'échange de puissance ne peut pas alors plus être assuré. Des génératrices de puissance peuvent par exemple se retrouver déconnectées du réseau.

Une telle intégration de réseaux continus maillés réduit cependant en pratique la marge de stabilité transitoire de ces réseaux alternatifs. De tels réseaux peuvent ainsi plus facilement devenir instables après des perturbations importantes.

La publication intitulée 'Active Power Control Strategies for Transient Stability Enhancement of AC/DC Grids With VSC-HVDC Multi-Terminal Systems', par Javier Renedo et al., dans IEEE Transactions on Power Systems, vol. 31, N°6, pages 4595-4605 en novembre 2016, décrit une solution de contrôle pour améliorer la stabilité transitoire des réseaux alternatifs. Dans cette solution, différents convertisseurs de points conversion sont interconnectés par l'intermédiaire de lignes haute tension continu, une liaison point à point étant formée entre chaque couple de convertisseurs. Ce document propose notamment de mesurer les fréquences sur chacun des bus alternatifs, puis d'appliquer une correction de la puissance active de consigne de chacun des convertisseurs du réseau continu, la correction de la puissance active d'un convertisseur étant fonction d'une mesure de fréquence sur le bus réseau alternatif connecté à ce convertisseur. La fréquence sur un bus alternatif peut également être identifiée comme la vitesse angulaire de la tension. La mesure de vitesse angulaire instantanée peut être effectuée par une unité de mesure de phaseurs (Phasor Measurement Unit en langue anglaise).

Un tel procédé de contrôle s'avère insuffisant pour fournir une augmentation de la marge de stabilité transitoire suffisante, en particulier lors de perturbations spécifiques, tout comme les procédés de contrôle dans les états de la technique EP3035476 et WO2014/053171.

L'invention vise à résoudre un ou plusieurs de ces inconvénients. L'invention porte ainsi sur un procédé de commande d'un réseau de transmission électrique, tel que défini dans les revendications annexées.

L'invention porte également sur les variantes des revendications dépendantes. L'homme du métier comprendra que chacune des caractéristiques de la description ou d'une revendication dépendante peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

[Fig.1] est une représentation schématique d'un exemple de réseau de distribution pour la mise en oeuvre de l'invention.

[Fig.2] représente des connexions alternatives virtuelles pouvant être émulées par le réseau de la figure 1 ;

[Fig.3] représente un réseau simplifié avec interconnexion entre des bus de réseau alternatif ;

[Fig.4] est un schéma illustrant un exemple d'un mode de commande d'un convertisseur dans un système selon l'invention ;

[Fig.5] représente un réseau de référence utilisé pour mettre en oeuvre des simulations ;

[Fig.6] est un diagramme illustrant l'évolution de la vitesse de génératrices du réseau de référence lors de la mise en oeuvre de l'invention ;

[Fig.7] est un diagramme illustrant l'évolution du déphasage entre des génératrices du réseau de référence lors de la mise en oeuvre de l'invention ;

[Fig.8] est un diagramme illustrant l'évolution des puissances de convertisseurs mis en oeuvre par un procédé de commande selon l'invention dans le réseau de référence.

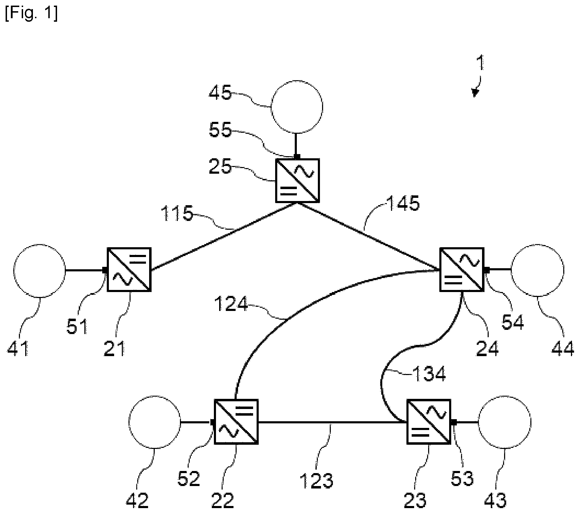

La figure 1 illustre schématiquement un exemple de réseau de distribution électrique 1, incorporant un réseau haute tension continu à postes de conversion multiples. Le réseau de distribution électrique comporte ainsi des postes de conversion, incluant chacun un convertisseur alternatif/continu respectif. Les postes de conversion incluent des convertisseurs 21 à 25 respectifs. Les convertisseurs 21 à 25 sont par exemple de type convertisseurs modulaires multiniveaux. Chacun des convertisseurs 21 à 25 comporte une interface continu connectée à au moins une interface continu d'un autre convertisseur, par l'intermédiaire d'une ligne haute tension continu. Les interfaces continu des convertisseurs 21 et 25 sont ainsi connectées par l'intermédiaire de la ligne haute tension 115, les interfaces continu des convertisseurs 24 et 25 sont ainsi connectées par l'intermédiaire de la ligne haute tension 145, les interfaces continu des convertisseurs 22 et 23 sont ainsi connectées par l'intermédiaire de la ligne haute tension 123, les interfaces continu des convertisseurs 22 et 24 sont ainsi connectées par l'intermédiaire de la ligne haute tension 124, et les interfaces continu des convertisseurs 23 et 24 sont ainsi connectées par l'intermédiaire de la ligne haute tension 123.

Ainsi, l'invention peut être mise en oeuvre pour des cas où il n'y a pas des liaisons haute tension continu point à point entre les interfaces continu de chacune des paires de convertisseurs. Ainsi, il n'y a pas de ligne haute tension continu entre les convertisseurs 21 et 22, ni entre les convertisseurs 21 et 23, ni entre les convertisseurs 21 et 24, ni entre les convertisseurs 22 et 23, ni entre les convertisseurs 22 et 25, ni entre les convertisseurs 23 et 25.

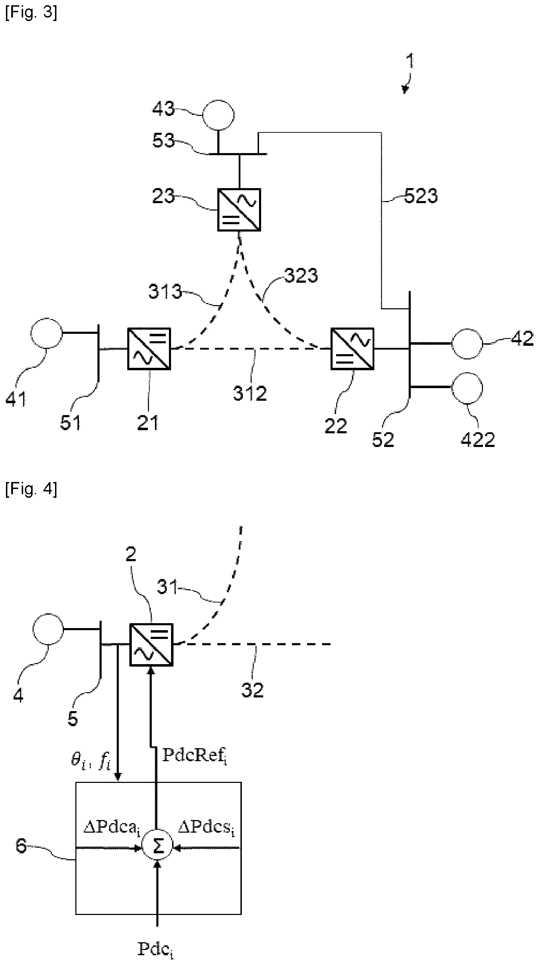

Par ailleurs, chacun des convertisseurs 21 à 25 comporte une interface alternatif respective. L'interface alternatif de chacun des convertisseurs 21 à 25 est connectée à un bus de tension alternative 51 à 55 respectif. Chacun des bus 51 à 55 est connecté à un réseau alternatif respectif 41 à 45. Dans l'exemple illustré, il n'y a pas d'interconnexions entres les réseaux alternatifs 41 à 45. Cependant, on peut envisager des interconnexions entre certains des réseaux alternatif, comme dans l'exemple simplifié illustré à la figure 3. Ainsi, dans l'exemple de la figure 3, une liaison 523 raccorde le bus 53 au bus 52. Deux machines 42 et 422 sont ici connectées au bus 52.

Le fonctionnement au niveau d'un poste de conversion incluant un convertisseur 2 pour la mise en oeuvre de l'invention est illustré par l'intermédiaire du schéma de la figure 4. Les opérations suivantes sont réalisées pour chacun des convertisseurs 2 des postes de conversion. Pour un convertisseur 2 d'indice i présent dans un poste de conversion, l'opérateur fournit une valeur de puissance active de consigne $Pdc_i$. Le circuit de commande 6 du convertisseur 2 récupère ainsi cette valeur de puissance active de consigne $Pdc_i$. Le circuit de commande 6 récupère des valeurs instantanées de tension $V_i$, d'angle de tension $\theta_i$ et avantageusement de fréquence $f_i$ de cette tension, au niveau du bus 5 de tension alternative connecté au réseau alternatif 4. La récupération des valeurs $V_i$, $\theta_i$ et $f_i$ peut être réalisée par boucle à verrouillage de phase sur le bus 5. L'interface continu du convertisseur 2 est ici connectée aux lignes haute tension continu 31 et 32, pour connexion point à point avec d'autres convertisseurs d'autres postes de conversion.

Le circuit de commande 6 modifie la puissance active de consigne $Pdc_i$, en appliquant une valeur $PdcRef_i$ de puissance active de consigne au convertisseur 2, en ajoutant un terme $\Delta Pdcs_i$ à la valeur à la puissance active de consigne $Pdc_i$, avec :

[Math. 3]

$$\Delta P_{dcs_i} = \sum_{j=1}^{n} k_{\delta_{ij}}((\theta_i - \theta_j) - \theta ref_{ij}) \ avec \ i \neq j \ \ et \ \ k_{\delta_{ij}} = k_{\delta_{ji}}$$

avec n le nombre des convertisseurs connectés aux bus de tension alternative, avec $k\delta_{ij}$ un paramètre de réglage de contribution à une puissance corrective de synchronisation, $\theta ref_{ij}$ une référence de la différence des angles entre les bus i et j en régime établi. Avantageusement, $\theta ref_{ij}$ a une valeur non nulle pour tenir compte d'un déphasage de référence entre les bus i et j.

Avec un tel mode de fonctionnement, on peut ajouter au moins un terme de puissance synchronisante entre chacune des paires de convertisseurs, même en l'absence de liaison haute tension point à point entre ces convertisseurs. Un tel mode de fonctionnement est transparent pour l'opérateur du réseau, afin que celui-ci n'ait à fournir que les valeurs de puissance active de consigne $Pdc_i$ aux convertisseurs.

Avantageusement, le circuit de commande 6 modifie la puissance active de consigne $Pdc_i$, en appliquant la valeur $PdcRef_i$ de puissance active de consigne au convertisseur 2, en ajoutant un terme $\Delta Pdca_i$ à la valeur à la puissance active de consigne Pdcsi, avec :

[Math. 4]

$$\Delta P_{dca_i} = \sum_{j=1}^{n} k_{f_{ij}}(f_i - f_j) \; avec \; i \neq j \; \; et \; k_{f_{ij}} = k_{f_{ji}}$$

avec kf$_{ij}$ un paramètre de réglage de contribution à une puissance corrective d'amortissement.

La valeur PdcRef$_i$ de puissance active de consigne peut alors prendre la valeur suivante :

[Math. 5]

$$P_{dcRef_i} = P_{dc_i} + \Delta P_{dca_i} + \Delta P_{dcs_i}$$

Pour l'exemple de réseau simplifié illustré à la figure 3, les valeurs de puissance active de consigne pour les convertisseurs 21 à 23 sont les suivantes :

[Math. 6]

$$P_{dcRef1} = P_{dc1} + k_{\delta_{12}}(\theta_1 - \theta_2) + k_{\delta_{13}}(\theta_1 - \theta_3) + k_{f_{12}}(f_1 - f_2) + k_{f_{13}}(f_1 - f_3)$$

[Math. 7]

$$P_{dcRef2} = P_{dc2} + k_{\delta_{21}}(\theta_2 - \theta_1) + k_{\delta_{23}}(\theta_3 - \theta_1) + k_{f_{21}}(f_2 - f_1) + k_{f_{23}}(f_2 - f_3)$$

[Math. 8]

$$P_{dcRef3} = P_{dc3} + k_{\delta_{31}}(\theta_3 - \theta_1) + k_{\delta_{32}}(\theta_3 - \theta_2) + k_{f_{31}}(f_3 - f_1) + k_{f_{32}}(f_3 - f_2)$$

Pour le calcul des paramètres kδ$_{ij}$ et kf$_{ij}$, on tient compte du fait que la dynamique du réseau haute tension continu est beaucoup plus rapide que la dynamique des réseaux alternatifs et des machines électromécaniques qui y sont connectées. Les équations algébriques décrivant le comportement du réseau haute tension continu peuvent ainsi négliger sa dynamique, en représentant chacun des postes de conversion par son modèle d'injection de courant.

En l'absence de dispositif de stockage d'énergie notable dans le réseau haute tension continu, la somme des puissances injectées vers ce réseau haute tension continu est définie comme égale à la somme des puissances sortant de ce réseau haute tension continu. Dans l'exemple de la figure 3, la relation suivante doit être respectée :

[Math. 9]

$$P_{dcRef1} + P_{dcRef2} + P_{dcRef3} = 0$$

En outre, en fonctionnement normal, le contrôle en courant et tension garantit la relation suivante :

[Math. 10]

$$P_{dc1} + P_{dc2} + P_{dc3} = 0$$

Les paramètres de réglage de contribution doivent alors respecter la règle suivante:

[Math. 11]

$$k_{\delta_{ij}} = k_{\delta_{ji}} \; et \; k_{f_{ij}} = k_{f_{ji}}$$

En garantissant que la somme des puissances de consigne soit toujours nulle même avec les termes correctifs, il est possible de mettre en oeuvre de tels calculs dans une couche supérieure dans tout type de contrôle. L'invention peut donc aisément être mise en oeuvre à la fois lorsque le réseau haute tension continu est configuré en maître/esclaves et lorsque le réseau haute tension continu est configuré pour que les postes de conversion fonctionnent en contrôle de statisme en tension (pour voltage-droop control en langue anglaise).

Le terme de puissance synchronisante se comporte comme une ligne de transmission entre les convertisseurs i et j. Pour émuler une ligne de transmission entre les convertisseurs i et j, il suffit de calculer un gain $k_{\delta_{ij}}$ approprié.

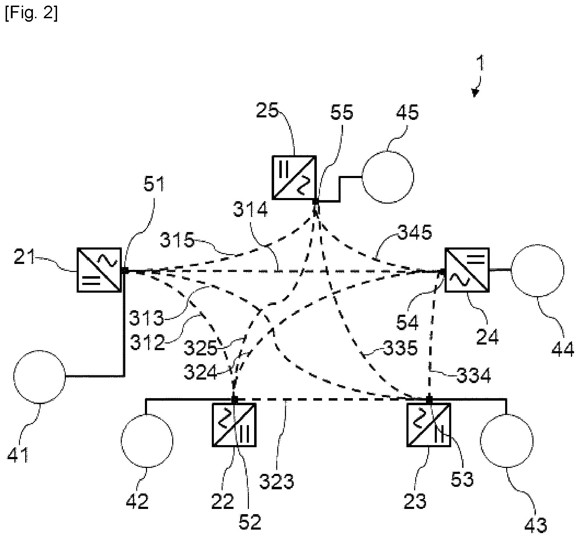

A partir du réseau haute tension continu multipoints 1, un réseau d'admittances virtuelles connectées aux bus AC peut être émulé, même en l'absence de connexions entre ces bus AC. On peut ainsi noter qu'un réseau haute tension continu comportant un nombre n de postes de conversion dispose d'un nombre n-1 de degrés de liberté. La figure 2 représente ainsi des connexions alternatives virtuelles pouvant être émulées par le réseau 1 de la figure 1 avec le procédé de commande décrit. Ainsi, une liaison alternative peut être émulée entre l'interface alternative d'un des postes de conversion 21 à 25, et l'interface alternative de chacun des autres de ces postes de conversion 21 à 25. Comme illustré :

- des liaisons alternatives 312 à 315 peuvent être émulées entre l'interface alternatif du convertisseur 21 d'une part et une interface alternatif respective de chacun des convertisseurs 22 à 25 ;

- des liaisons alternatives 323 à 325 peuvent être émulées entre l'interface alternatif du convertisseur 22 d'une part et une interface alternatif respective de chacun des convertisseurs 23 à 25 ;

- des liaisons alternatives 334 et 335 peuvent être émulées entre l'interface alternatif du convertisseur 23 d'une part et une interface alternatif respective de chacun des convertisseurs 24 et 25 ;

- une liaison alternative 345 peut être émulée entre l'interface alternatif du convertisseur 24 d'une part et une interface alternatif respective du convertisseur 25.

Ainsi, de la puissance corrective de synchronisation ou de la puissance corrective d'amortissement peut toujours être intégrée entre deux postes de conversion du réseau 1, même en l'absence de liaison haute tension continu point à point entre ces postes de conversion.

De façon générale un tel réseau alternatif multipoints avec un nombre m de noeuds connectés à des systèmes externes peut être réduit à un modèle de lignes entre ces m noeuds, par la technique de réduction de Kron.

L'injection de puissance de synchronisation dans le réseau alternatif peut notamment être réalisée de deux façons selon l'invention.

Selon une première solution :

[Math. 12]

$$\Delta P_{dcs_i} = \sum_{j=1}^{n} k_{\delta_{ij}} \left( \left( \theta_i - \theta_j \right) - \theta ref_{ij} \right)$$

$\theta ref_{ij}$ est une différence d'angle de référence calculée par le calcul de flux de puissance et déterminé par une couche de contrôle, par exemple le contrôle secondaire.

Selon une seconde solution, les gains $k_{\delta_{ij}}$ sont calculés de façon à obtenir le point d'équilibre souhaité. Ainsi, si l'opérateur du réseau souhaite obtenir la puissance $Pdc_0$ en régime permanent, il souhaitera injecter de la puissance synchronisante seulement entre les bus d'indices i et j. Cette puissance peut se décomposer comme suit :

[Math. 13]

$$P_{dcs_0} = P_0 \; + k_{\delta_{ij}} \left( \theta_i - \theta_j \right)$$

On peut ainsi définir les valeurs de $P_0$ et $k\delta_{ij}$ pour obtenir la valeur souhaitée de $Pdcs_0$, en régime établi.

La puissance transmise entre les postes de conversion i et j par ligne de transmission virtuelle ou émulée peut se définir comme suit :

[Math. 14]

$$P_{Vij} = V_i * V_j * Y_{ij} * \sin(\theta_i - \theta_j)$$

Avec $Y_{ij}$ une valeur d'admittance virtuelle dynamique émulée entre les interfaces alternatif des postes de conversion i et j.

Comme Vi et Vj ont des valeurs connues, on peut émuler le comportement souhaité pour la valeur d'admittance $Y_{ij}$.

La puissance de référence souhaitée par l'opérateur du réseau 1 peut se définir comme suit :

[Math. 15]

$$P_{dcs_0} = P_0 \ + k_{\delta_{ij}} * sin(\theta_i - \theta_j)$$

Avec $k\delta_{ij}$ = Vi * Vj * $Y_{ij}$. L'opérateur du réseau 1 peut ne calculer que le terme $P_0$ ou alors fixer $P_0$=0.

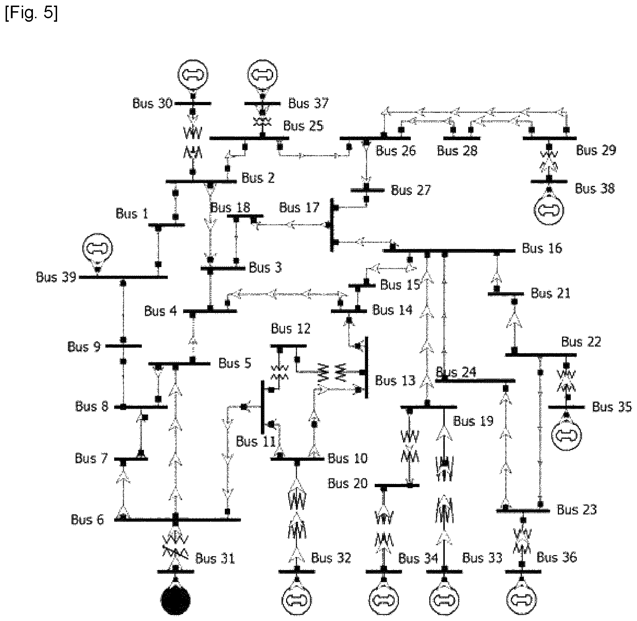

Des simulations ont été réalisées pour l'exemple du modèle de réseau défini par l'IEEE pour la Nouvelle Angleterre et comportant 39 bus alternatif et 10 génératrices, tel que reproduit à la figure 5. Dans l'exemple de la simulation, le réseau comporte trois postes de conversion alternatif-continu. Dans ce modèle, l'interface alternatif d'un poste de conversion est connectée au bus de référence 39. L'interface alternatif d'un autre poste de conversion est connectée au bus de référence 16. L'interface alternatif d'un autre poste de conversion est connectée au bus de référence 19.

On a pris comme hypothèse un défaut intervenant sur la ligne entre les bus référencés 5 et 8. On constate qu'en maintenant les consignes de puissances des convertisseurs constantes, les génératrices connectées aux bus référencés 31 et 10 se désynchronisent progressivement et finissent par être isolés du système.

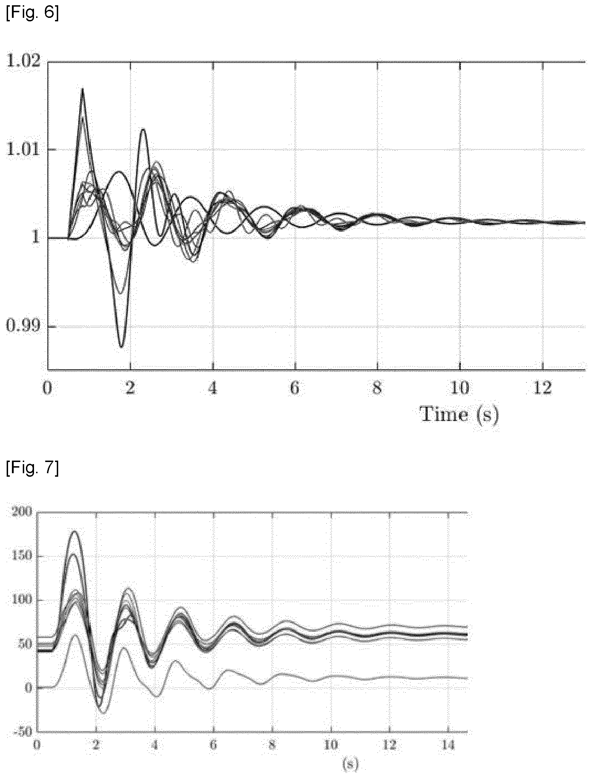

Avec la mise en oeuvre d'un procédé de commande selon l'invention, on a obtenu les résultats illustrés à la figure 6. Le diagramme de la figure 6 illustre l'évolution de la vitesse des génératrices en fonction du temps, après l'apparition d'un défaut sur la ligne entre les bus référencés 5 et 8. On constate qu'après le défaut, toutes les génératrices sont confrontées à une oscillation. Mais cette oscillation est amortie et les vitesses de rotation des génératrices atteignent une valeur stable après quelques secondes.

La figure 7 illustre le déphasage angulaire entre la génératrice de référence 1 par rapport aux autres génératrices, lors de l'utilisation d'un procédé de commande selon l'invention. On constate qu'après un défaut, le déphasage oscille mais reste limité. Le déphasage est rapidement amorti pour se stabiliser à une valeur constante après quelques secondes, pour chacune autres des génératrices.

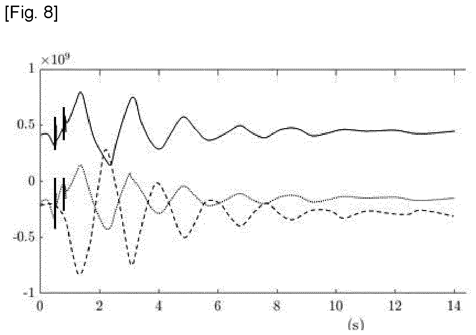

La figure 8 est un diagramme illustrant la puissance modulée par les convertisseurs, lors de la mise en oeuvre d'un procédé de commande selon l'invention. Les modulations de puissance mises en oeuvre par l'intermédiaire des termes correctifs au niveau des trois postes de conversion permettent d'obtenir les résultats illustrés précédemment.

**Revendications**

1. Procédé de commande d'un réseau de transmission électrique, le réseau de transmission comprenant plusieurs lignes haute tension continu (320) et n convertisseurs alternatif/continu identifiés par un indice i respectif, avec n supérieur ou égal à 3, lesdits convertisseurs étant interconnectés par lesdites lignes haute tension continu, chacun desdits convertisseurs alternatif/continu (321) étant connecté d'une part à un bus de tension alternative (11) identifié par un indice i respectif et d'autre part à une desdites lignes haute tension continu (320), le procédé est **caractérisé en ce qu'**il comprend :

    - pour chacun des convertisseurs d'indice i, la récupération de sa valeur de puissance active de consigne $Pdc_i$ appliquée ;
    - la récupération des valeurs instantanées $V_i$ de tension et $\theta_i$ d'angle de tension des bus d'indice i ;

- la modification de la puissance active de consigne $Pdc_i$ de chacun des convertisseurs d'indice i d'une valeur incluant un terme $\Delta Pdcs_i$ avec:

[Math. 16]

$$\Delta P_{dcs_i} = \sum_{j=1}^{n} k_{\delta_{ij}}((\theta_i - \theta_j) - \theta ref_{ij})\ avec\ i \neq j\ \ et\ k_{\delta_{ij}} = k_{\delta_{ji}}$$

avec n le nombre desdits convertisseurs connectés auxdits bus de tension alternative, avec j un indice désignant tout bus de tension alternative et ledit convertisseur qui lui est connecté parmi le nombre n et différent du bus de tension alternative i et ledit convertisseur qui lui est connecté, avec $k\delta_{ij}$ un paramètre de réglage de contribution, $\theta ref_{ij}$ une référence de la différence des angles entre les bus i et j en régime établi.

2. Procédé de commande d'un réseau de transmission électrique (3) selon la revendication 1, dans lequel $\theta ref_{ij}$ a une valeur non nulle.

3. Procédé de commande d'un réseau de transmission électrique (3) selon la revendication 1 ou 2, dans lequel le procédé comprend :

- la récupération des valeurs instantanées $f_i$ de fréquence de la tension des bus d'indice i ;
- la modification de la puissance active de consigne $Pdc_i$ de chacun des convertisseurs d'indice i d'une valeur incluant un terme $\Delta Pdca_i$ avec:

[Math. 17]

$$\Delta P_{dca_i} = \sum_{j=1}^{n} k_{f_{ij}}(f_i - f_j)\ avec\ i \neq j\ \ et\ k_{f_{ij}} = k_{f_{ji}}$$

avec $kf_{ij}$ un paramètre de réglage de contribution.

4. Procédé de commande d'un réseau de transmission électrique (3) selon l'une quelconque des revendications précédentes, dans lequel au moins deux desdits bus de tension alternative sont interconnectés.

5. Procédé de commande d'un réseau de transmission électrique (3) selon l'une quelconque des revendications 1 à 3, dans lequel aucun desdits bus de tension alternative ne sont interconnectés.

6. Procédé de commande d'un réseau de transmission électrique selon l'une quelconque des revendications précédentes, dans lequel au moins deux desdits convertisseurs n'ont pas leurs interfaces continu connectées en point à point par l'intermédiaire d'une ligne haute tension continu.

7. Procédé de commande selon l'une quelconque des revendications précédentes, dans lequel le terme $\Delta Pdcs_i$ est calculé par un circuit de calcul du convertisseur d'indice i.

8. Procédé de commande selon l'une quelconque des revendications précédentes, dans lequel la puissance active de consigne de chacun desdits convertisseurs est modifiée d'une valeur incluant un terme $\Delta Pdcd_i$ d'estimation de la perturbation. 1

**Patentansprüche**

1. Verfahren zur Steuerung eines elektrischen Übertragungsnetzes, wobei das Übertragungsnetz mehrere Gleichstromhochspannungsleitungen (320) und n Wechselstrom-/Gleichstrom-Wandler umfasst, die durch einen jeweiligen Index i identifiziert sind, wobei n größer als oder gleich 3 ist, wobei die Wandler durch die Gleichstromhochspannungsleitungen miteinander verbunden sind, wobei jeder der Wechselstrom-/Gleichstrom-Wandler (321) einerseits mit einem Wechselspannungsbus (11), der durch einen jeweiligen Index i identifiziert ist, und andererseits mit einer der Gleichstromhochspannungsleitungen (320) verbunden ist, wobei das Verfahren **dadurch gekennzeichnet ist, dass** es Folgendes umfasst:

- für jeden der Wandler mit Index i, Wiederherstellen seines aufgebrachten Wirkleistungseinstellwertes $Pdc_i$;
- Wiederherstellen der Momentanwerte $V_i$ der Spannung und $\theta_i$ des Spannungswinkels der Busse mit Index i;
- Ändern der Einstellwirkleistung $Pdc_i$ von jedem der Wandler mit Index i eines Wertes, der einen Term $\Delta Pdcs_i$ beinhaltet, wobei:

[Math. 16]

$$\Delta P_{dcs_i} = \sum_{j=1}^{n} k_{\delta_{ij}}((\theta_i - \theta_j) - \theta ref_{ij}) \quad \text{wobei} \quad i \neq j \quad \text{und} \quad k_{\delta_{ij}} = k_{\delta_{ji}}$$

wobei n die Anzahl der Wandler ist, die mit den Wechselspannungsbussen verbunden sind, wobei j ein Index ist, der einen beliebigen Wechselspannungsbus und den Wandler, der damit verbunden ist, aus der Anzahl n und verschieden von dem Wechselspannungsbus i und dem Wandler, der damit verbunden ist, angibt, wobei $k\delta_{ij}$ ein Beitragssteuerparameter ist, wobei sich $\theta ref_{ij}$ auf den Unterschied der Winkel zwischen den Bussen i und j bei festgelegter Regelung bezieht.

2. Verfahren zur Steuerung eines elektrischen Übertragungsnetzes (3) nach Anspruch 1, wobei $\theta ref_{ij}$ einen Wert ungleich null aufweist.

3. Verfahren zur Steuerung eines elektrischen Übertragungsnetzes (3) nach Anspruch 1 oder 2, wobei das Verfahren Folgendes umfasst:

- Wiederherstellen der Momentanwerte $f_i$ der Frequenz der Spannung der Busse mit Index i;
- Ändern der Einstellwirkleistung $Pdc_i$ von jedem der Wandler mit Index i um einen Wert, der einen Term $\Delta Pdca_i$ beinhaltet, wobei:

[Math. 17]

$$\Delta P_{dca_i} = \sum_{j=1}^{n} k_{f_{ij}}(f_i - f_j) \quad \text{wobei} \quad i \neq j \quad \text{und} \quad k_{f_{ij}} = k_{f_{ji}}$$

wobei $kf_{ij}$ ein Beitragssteuerparameter ist.

4. Verfahren zur Steuerung eines elektrischen Übertragungsnetzes (3) nach einem der vorhergehenden Ansprüche, wobei mindestens zwei der Wechselspannungsbusse miteinander verbunden sind.

5. Verfahren zur Steuerung eines elektrischen Übertragungsnetzes (3) nach einem der Ansprüche 1 bis 3, wobei keiner der Wechselspannungsbusse miteinander verbunden ist.

6. Verfahren zur Steuerung eines elektrischen Übertragungsnetzes nach einem der vorhergehenden Ansprüche, wobei mindestens zwei der Wandler mit ihren kontinuierlichen Schnittstellen nicht punktuell über eine Gleichstromhochspannungsleitung verbunden sind.

7. Verfahren zur Steuerung nach einem der vorhergehenden Ansprüche, wobei der Term $\Delta Pdcs_i$ durch eine Berechnungsschaltung des Wandlers mit Index i berechnet wird.

8. Verfahren zur Steuerung nach einem der vorhergehenden Ansprüche, wobei die Einstellwirkleistung von jedem der Wandler um einen Wert modifiziert wird, der einen Term $\Delta Pdcd_i$ zur Schätzung der Störung beinhaltet.

EP 3 991 262 B1

**Claims**

1. A method of controlling an electrical transmission network, wherein the transmission network comprises a plurality of high-voltage DC lines (320) and n AC/DC converters identified by a respective index i, with n being greater than or equal to 3, said converters being interconnected by said high-voltage DC lines, each of said AC/DC converters (321) being connected on the one hand to an AC voltage bus (11) identified by a respective index i and on the other hand to one of said high voltage DC lines (320), the method being **characterized in that** it comprises:

   - for each of the converters of index i, recovering its value of applied active power setpoint $Pdc_i$;
   - recovering the instantaneous values $V_i$ of voltage and $\theta_i$ of voltage angle of the buses of index i;
   - modifying the active power setpoint $Pdc_i$ of each of the converters of index i by a value including a term $\Delta Pdcs_i$ with:

   [Math. 16]

   $$\Delta P_{dcs_i} = \sum_{j=1}^{n} k_{\delta_{ij}}\left(\left(\theta_i - \theta_j\right) - \theta ref_{ij}\right) \ with \ i \neq j \ and \ k_{\delta_{ij}} = k_{\delta_{ji}}$$

   n being the number of said converters connected to said AC voltage buses, j being an index designating any AC voltage bus and said converter connected thereto among the number n and different from the AC voltage bus i and said converter connected thereto, $k_{\delta_{ij}}$ being a contribution adjustment parameter, and $\theta ref_{ij}$ a reference of the difference in angles between buses i and j in steady state.

2. A method for controlling an electrical transmission network (3) according to claim 1, wherein $\theta ref_{ij}$ has a non-zero value.

3. A method for controlling an electrical transmission network (3) according to claim 1 or 2, wherein the method comprises:

   - recovering the instantaneous values $f_i$ of frequency of the voltage of the index i buses;
   - changing the desired active power $Pdc_i$ of each of the index i converters by a value including a $\Delta Pdca_i$ term with:

   [Math. 17]

   $$\Delta P_{dca_i} = \sum_{j=1}^{n} k_{f_{ij}}(f_i - f_j) \ with \ i \neq j \ and \ k_{f_{ij}} = k_{f_{ji}}$$

   $kf_{ij}$, a contribution adjustment parameter.

4. A method for controlling an electrical transmission network (3) according to any one of the preceding claims, wherein at least two of said AC voltage buses are interconnected.

5. A method for controlling an electrical transmission network (3) according to any one of claims 1 to 3, wherein none of said AC voltage buses are interconnected.

6. A method for controlling an electrical transmission network according to any one of the preceding claims, wherein at least two of said converters do not have their DC interfaces connected point to point via a high-voltage DC line.

7. A control method according to any one of the preceding claims, wherein the term $\Delta Pdcs_i$ is calculated by an index converter calculation circuit i.

8. A control method according to any one of the preceding claims, wherein the desired active power of each of the said converters is modified by a term $\Delta Pdcd_i$ for estimating the disturbance.

9

[Fig. 1]

[Fig. 2]

[Fig. 3]

[Fig. 4]

[Fig. 5]

[Fig. 6]

[Fig. 7]

[Fig. 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3035476 A

- WO 2014053171 A

**Littérature non-brevet citée dans la description**

- **JAVIER RENEDO et al.** Active Power Control Strategies for Transient Stability Enhancement of AC/DC Grids With VSC-HVDC Multi-Terminal Systems. *IEEE Transactions on Power Systems,* Novembre 2016, vol. 31 (6), 4595-4605